(19) Europäisches Patentamt
European Patent Office
Office européen des brevets

(11) **EP 2 326 813 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(21) Anmeldenummer: **09736786.6**

(22) Anmeldetag: **18.09.2009**

(51) Int Cl.:
*F02B 29/04* $^{(2006.01)}$     *F02B 63/04* $^{(2006.01)}$

(86) Internationale Anmeldenummer:
**PCT/AT2009/000361**

(87) Internationale Veröffentlichungsnummer:
**WO 2010/034045 (01.04.2010 Gazette 2010/13)**

(54) **BRENNKRAFTMASCHINE**

INTERNAL COMBUSTION ENGINE

MOTEUR À COMBUSTION INTERNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.09.2008 AT 14992008**

(43) Veröffentlichungstag der Anmeldung:
**01.06.2011 Patentblatt 2011/22**

(73) Patentinhaber: **GE Jenbacher GmbH & Co OG 6200 Jenbach (AT)**

(72) Erfinder:
• **SCHIESTL, Stefan**
  **A-6200 Wiesing (AT)**
• **WEITZER, Thomas**
  **A-6020 Innsbruck (AT)**

(74) Vertreter: **Torggler & Hofinger Patentanwälte Postfach 85 6010 Innsbruck (AT)**

(56) Entgegenhaltungen:
EP-A2- 1 403 493     WO-A-2007/097750
WO-A1-87/05360     US-A- 2 935 978
US-A1- 2003 114 978     US-A1- 2004 118 117
US-A1- 2004 244 782

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Betreiben einer Brennkraftmaschine, wobei Luft angesaugt und anschließend verdichtet wird, bevor sie zumindest einem Brennraum der Brennkraftmaschine zugeführt wird. Weiters betrifft die Erfindung ein Brennkraftmaschine umfassend eine Verdichtungseinrichtung zum Verdichten von Gas, eine Vorrichtung zum Verändern der Temperatur der verdichteten Luft, eine Regeleinrichtung oder Steuereinrichtung, welche die Brennkraftmaschine auf einen im Wesentlichen konstanten Betriebsparameter regelt. Darüber hinaus betrifft die Erfindung Regeleinrichtungen für das zuvor genannte Verfahren bzw. die zuvor genannte Brennkraftmaschine. Schließlich betrifft die Erfindung eine stationäre Kraftanlage umfassend eine Brennkraftmaschine der vorgenannten Art sowie einen Generator.

Leistungsstarke Brennkraftmaschinen weisen regelmäßig Verdichtungseinrichtungen auf, mit denen die angesaugte Luft, die dem Brennraum zugeführt wird, verdichtet wird. Dabei wird der Druck der angesaugten Luft deutlich erhöht.

In der Verdichtungseinrichtung der Brennkraftmaschine wird die angesaugte Luft verdichtet, anschließend unter Umständen mit einer Kühleinrichtung gekühlt und abschließend in den Brennraum der Brennkraftmaschine eingeleitet. Häufig kommt es im Bereich der Einlassventile zu Kondensation von Wasser, was dazu führt, dass mechanische Komponenten mit denen es in Kontakt kommt, beschädigt werden. Darüber hinaus verursacht das Kondensat Zündaussetzer was in weitere Folge zu Motorabstellungen führen kann.

Die Patentschrift EP 1 403 493 A2 offenbart zum Beispiel ein Verfahren zum Betreiben einer Brennkraftmaschine. Hier wird gezeigt, dass Luft und Treibgas angesaugt und anschließend verdichtet werden. Es wird auch angeführt, dass ein Sensor vorhanden sein kann, der ein charakteristisches Signal für die Luftfeuchtigkeit der angesaugten Luft liefert. Anhand dieses Feuchtigkeitssignals wird über eine Steuereinheit die Luftmenge, welche dem Brennraum zugeführt wird, geregelt.

Aufgabe der vorliegenden Erfindung ist daher ein Verfahren zum Betreiben einer Brennkraftmaschine bereitzustellen bei dem die Probleme der Wasserkondensation vermindert sind. Weiters soll eine Brennkraftmaschine der oben genannten Gattung bereitgestellt werden, die weniger anfällig ist für mechanische Beschädigung und Zündaussetzer.

Diese Aufgabe wird gelöst durch ein Verfahren, welches dadurch gekennzeichnet ist, dass die Luftfeuchtigkeit der angesaugten Luft ermittelt wird und die Temperatur der dem Brennraum zugeführten verdichteten Luft in Abhängigkeit von der Luftfeuchtigkeit der angesaugten Luft verändert. Bei größerer Luftfeuchtigkeit in der angesaugten Luft wird die Temperatur der dem Brennraum zuzuführenden verdichtenden Luft erhöht, wobei oberhalb eines, vorzugsweise vorgebbaren, maximalen Feuchtigkeitswertes die Temperatur der verdichteten Luft nicht mehr erhöht wird und die Ausgangsleistung der Brennkraftmaschine reduziert wird.

Bei einer Brennkraftmaschine der eingangs genannten Gattung wird diese Aufgabe dadurch gelöst, dass ein Feuchtigkeitssensor vorgesehen ist, mit dem die Luftfeuchtigkeit der von der Brennkraftmaschine im Betriebszustand angesaugten Luft vor der Verdichtungseinrichtung messbar ist, wobei die Steuereinrichtung oder Regeleinrichtung die Vorrichtung zum Verändern der Temperatur der verdichteten Luft in Abhängigkeit von der Luftfeuchtigkeit steuert oder regelt.

Abhängig von den klimatischen Bedingungen enthält die angesaugte Luft nämlich einen höheren oder niedrigeren Gehalt an gasförmigem Wasser. Diese so genannte relative Luftfeuchtigkeit beschreibt das prozentuale Verhältnis zwischen dem momentanen Wasserdampfdruck und dem Sättigungswasserdampfdruck über einer reinen und ebenen Wasseroberfläche. Bei einer relativen Luftfeuchtigkeit von 50 Prozent enthält die Luft die Hälfte der Wasserdampfmenge die bei entsprechender Temperatur maximal enthalten sein könnte. Bei 100 Prozent relativer Luftfeuchtigkeit und der entsprechenden Temperatur ist die Luft vollständig mit Wasserdampf gesättigt. Der Sättigungsdampfdruck von Wasser ist wie aus der Clausius-Clapeyron-Gleichung bekannt ist, abhängig von Temperatur- und Druckänderungen. Aufgrund der neuen Temperatur- und Druckverhältnisse der angesaugten, nunmehr verdichteten Luft nach der Verdichtungseinrichtung und optional der Kühleinrichtung, kann der Sättigungswasserdampfdruck zu Kondensation im Bereich vor den Einlassventilen von in der Luft befindlichen Wasser führen. Durch Ermitteln der Luftfeuchtigkeit der Luft vor der Verdichtungseinrichtung (bzw. vor der Verdichtung) kann auf die Soll-Temperatur der verdichteten Luft geschlossen werden, sodass in der Luft enthaltenes Wasser nicht kondensiert. Dies setzt voraus, dass die Volumina und die Druckbedingungen, gegebenenfalls auch die tatsächliche Temperatur nach der Verdichtungseinrichtung und nach einer optionalen Kühleinrichtung aber vor dem Brennraum der Brennkraftmaschine bekannt sind. Mittels eines Reglers (z.B. dann, wenn die Temperatur bekannt ist) oder einer Steuereinrichtung (z.B. dann, wenn die Temperatur der verdichteten Luft geschätzt oder nur rein rechnerisch ermittelt wird) kann dann über eine Vorrichtung zum Verändern der Temperatur der verdichteten Luft die tatsächliche Lufttemperatur eingestellt werden und zwar so, dass es eben nicht zu Kondensation kommt.

Die Erfindung geht von der Erkenntnis aus, dass die relative Luftfeuchtigkeit der angesaugten Luft vor der Verdichtungseinrichtung eine Maßzahl ist, die repräsentativ ist für die mögliche Kondensation nach der Verdichtungseinrichtung. Da die Bedingungen im Motor im Betriebszustand bei gleichen Betriebsbedingungen im Wesentlichen immer dieselben sind, ist der wesentlichste Parameter die relative Luftfeuchtigkeit der angesaugten Luft. Diese wird im Rahmen der Erfindung beispielsweise im Zuluftschacht oder direkt in einem Luftfilter ermittelt, jedenfalls aber im Bereich vor der Verdichtungseinrichtung.

Im bevorzugten Ausführungsbeispiel handelt es sich bei der Brennkraftmaschine und dem Verfahren der beschriebenen Art um eine so genannte Gemischaufgeladene Brennkraftmaschine, das heißt um eine Brennkraftmaschine die mit einem verdichteten Treibstoff-Luftgemisch betrieben wird. In diesem Fall wird nicht nur die Temperatur der verdichteten Luft in Abhängigkeit der Luftfeuchtigkeit der angesaugten Luft verändert, sondern selbstverständlich vom verdichteten Treibstoff-Luftgemisch. Wenn in der Beschreibung und in den Ansprüchen allgemein die Rede von "verdichteter Luft" ist, ist davon auch ein "verdichtetes Treibstoff-Luftgemisch" erfasst, da dieses ja ebenfalls verdichtete Luft enthält. Typischerweise handelt es sich hierbei um so genannte Gasmotoren, die üblicherweise Ottomotorisch betrieben werden.

In einer bevorzugten Ausführungsvariante ist vorgesehen, dass die Brennkraftmaschine auf einem im Wesentlichen konstanten Betriebsparameter geregelt wird. Dabei kann vorgesehen sein, dass der Betriebsparameter ein Emissionswert ist. In einer bevorzugten Variante ist dann vorgesehen, dass auf eine konstante $NO_x$-Konzentration geregelt wird.

In einer besonders bevorzugten Ausführungsvariante ist vorgesehen, dass bei größerer Luftfeuchtigkeit in der angesaugten Luft die Temperatur der dem Brennraum zuzuführenden verdichtenden Luft erhöht wird, wobei oberhalb eines maximalen Feuchtigkeitswertes die Temperatur der verdichteten Luft nicht mehr erhöht wird. Der Grund hierfür liegt darin, dass die Laufeigenschaften des Motors oberhalb einer gewissen Temperatur der verdichteten Luft bzw. des verdichteten Gemischs deutlich schlechter werden. Da die erfindungsgemäßen Brennkraftmaschinen hauptsächlich für stationäre Kraftanlagen eingesetzt werden, die einen Generator antreiben ergeben sich zwei wichtige Regelkonzepte. Beim so genannten Netzparallelbetrieb, wo der Generator elektrische Energie in ein Stromnetz einspeisen soll, soll die Brennkraftmaschine bei möglichst konstanter Drehzahl betrieben werden. Beim so genannten Inselbetrieb soll die Brennkraftmaschine wiederum bei möglichst konstanter Ausgangsleistung betrieben werden soll. Insbesondere bei der Regelung auf möglichst konstante Ausgangsleistung, ist im bevorzugten Fall vorgesehen, dass bei Erreichen eines Maximalwertes der relativen Luftfeuchtigkeit in der angesaugten Luft oberhalb dieses maximalen Feuchtigkeitswertes auch die Ausgangsleistung der Brennkraftmaschine reduziert wird. Bevorzugt ist dabei vorgesehen, dass die Ausgangsleistung der Brennkraftmaschine durch Anpassung des Ladedrucks erfolgt.

In einer weiteren bevorzugten Ausführungsvariante kann vorgesehen sein, dass die dem Brennraum zuzuführende Luft gemeinsam mit dem Treibstoff, vorzugsweise Treibgas, verdichtet wird. Schließlich kann vorgesehen sein, dass die Regelung auf konstante $NO_x$-Emission durch Bestimmung des Ladedrucks erfolgt. Diese Regelung erfolgt also durch Bestimmung des Drucks (und der Temperatur) des Treibstoff/Luftgemisches unmittelbar vor den Einlassventilen. Schließlich kann vorgesehen sein, dass der maximale Feuchtigkeitswert in Abhängigkeit vom Sättigungspartialdruck des Wassers festgelegt wird. Bevorzugt ist also vorgesehen, dass zusätzlich zur Regelung der Gemischtemperatur auch der Gemischdruck durch die Leistungsregelung feuchteabhängig angepasst wird. Diese dafür vorgesehenen beiden Regler arbeiten bei steigender Luftfeuchtigkeit in der Reihenfolge: Gemischtemperaturerhöhung und anschließend Gemischdruckreduzierung (Leistungsreduktion). Bei wieder fallender Luftfeuchtigkeit erhöht sich der Gemischdruck zum Nenndruck (Nennleistung) und die Gemischtemperatur wird anschließend Richtung Nenntemperatur reduziert.

Für die Brennkraftmaschine hat sich als günstig erwiesen, wenn die Vorrichtung zum Verändern der Temperatur der verdichteten Luft eine Kühleinrichtung aufweist. Zusätzlich oder alternativ hierzu kann vorgesehen sein, dass die Vorrichtung zum Verändern der Temperatur der verdichteten Luft eine Heizeinrichtung aufweist. Kühleinrichtung und/oder Heizeinrichtung können dazu dienen, die Temperatur der verdichteten Luft bevor sie den Brennraum der Brennkraftmaschine zugeführt wird optimal zu regeln. Besonders günstig ist es dabei, wenn die Vorrichtung zum Verändern der Temperatur im Wesentlichen eine regelbare Kühleinrichtung aufweist, die z.B. wassergekühlt ist und die Temperatur der verdichteten Luft über die Wassertemperatur, die in die Kühleinrichtung eintritt eingestellt wird.

Günstigerweise ist dabei vorgesehen, dass die Regeleinrichtung die Brennkraftmaschine auf einen im Wesentlichen konstanten $NO_x$-Emissionswert regelt. Dies kann beispielsweise dadurch erfolgen, dass der Ladedruck vor den Einlassventilen ermittelt wird.

Besonders bevorzugt ist vorgesehen, dass die Regeleinrichtung derart ausgebildet ist, dass sie bei höherer Luftfeuchtigkeit mittels der Vorrichtung zum Verändern der Temperatur der verdichteten Luft die Temperatur der verdichteten Luft erhöht und bei Überschreiten eines oberen Grenzwertes der Feuchtigkeit der angesaugten Luft die Temperatur auf im Wesentlichen konstanten Wert hält und die Ausgangsleistung der Brennkraftmaschine vermindert. Dabei kann vorgesehen sein, dass die Ausgangsleistung der Brennkraftmaschine durch Anpassen des Ladedrucks, vorzugsweise durch Betätigung einer Drosselklappe und/oder eines Umblaseventils angepasst wird.

Die Erfindung betrifft neben dem zuvor beschriebenen Verfahren und der zuvor beschriebenen Brennkraftmaschine weiters eine Regeleinrichtung zur Durchführung des Verfahrens sowie eine Regeleinrichtung für eine Brennkraftmaschine der zuvor genannten Art. Schließlich ist eine stationäre Kraftanlage erfindungsgemäß vorgesehen, die eine Brennkraftmaschine der zuvor genannten Art sowie einen Generator umfasst.

Weitere Vorteile und Details der Erfindung ergeben sich anhand der Figur sowie der Figurenbeschreibung.

Es zeigt die Figur eine schematische Darstellung einer erfindungsgemäßen Brennkraftmaschine.

In der Fig. Ist eine Brennkraftmaschine 1 schematisch dargestellt. Diese weist den eigentlichen Motorblock 9 auf, der einen Generator 10 antreibt, sodass dieser elektrische Energie produziert. Der Ansaugtrakt 21 speist die (nicht gezeigten) Brennräume des Motorblocks 9 mit Treibstoff und Sauerstoffhältiger Luft. Im gezeigten Ausführungsbeispiel wird über eine Luftzufuhr 18 und eine Treibgaszufuhr 19, über die beispielsweise Methan zugeführt wird, in einem Gasmischer 17 ein Treibstoff/Luftgemisch erzeugt. Der Gasmischer speist das Gas (Luft und Treibgas) in die Verdichtungseinrichtung 2 ein, die über eine Welle 23 von einen Abgasturbolader 4 (im Abgastrakt 22) angetrieben wird. Das nunmehr verdichtete Gas wird in der Vorrichtung 3 zur Veränderung der Temperatur der verdichteten Luft (hier: verdichtetes Treibstoff-Luftgemisch) in der Form eines regelbaren Gemischkühlers 3 abgekühlt und anschließend über eine Drosseleinrichtung 5 (hier in Form einer Drosselklappe) zu den Einlassventilen über die Einlassleitung 13 in die Brennräume der mehrzylindrigen Brennkraftmaschine geführt. Eine regelbare beispielsweise wassergekühlte Kühleinrichtung 3 kann die Temperatur der Luft verändern, indem die Temperatur des Kühlwassers, das in die Kühleinrichtung 3 verändert wird. Typischerweise erfolgt eine solche Veränderung der Kühlwassertemperatur durch Variation des Zulaufs an kühlerem bzw. heißerem Wasser.

Erfindungsgemäß ist in der Luftansaugleitung 18 nunmehr ein Feuchtigkeitssensor 8 vorgesehen, der die relative Luftfeuchtigkeit der Ansaugluft ermittelt. Gleichzeitig wird die im gezeigte Ausführungsbeispiel die Temperatur der Ansaugluft mit einer Temperaturmessvorrichtung, beispielsweise einem Thermometer, ermittelt. Über eine Regeleinrichtung 11, die mit dem Sensor 8 verbunden ist, wird in Abhängigkeit von der elektrischen Leistung p oder des elektrischen Äquivalents e des Generators 10 die Vorrichtung 3 zum Verändern der Temperatur der verdichteten Luft geregelt. Gleichzeitig wird die Brennkraftmaschine über andere Stellglieder 23 und eine weitere Regeleinrichtung 12, die zur NO$_x$-Anpassung und zur Leistungsanpassung dienen, nachgeregelt. Weitere Stellglieder 23 sind beispielsweise der Zündzeitpunkt und das Gemisch λ (Verhältnis von Treibstoff zu Luftsauerstoff), das beispielsweise über die Gasmischeinrichtung 17 verändert wird. Die beiden Regeleinrichtungen 11, 12 kommunizieren über die Datenleitung 24 miteinander, theoretisch kann aber auch eine einzelne Regeleinrichtung vorgesehen sein.

Eine weitere Möglichkeit die Regelung der Brennkraftmaschine 1 zu verbessern, besteht darin zusätzliche Parameter zu ermitteln. Beispielsweise über im Abgastrakt 22 bzw. der Abgasleitung 14 angeordnete Sensoren 15, 16 die die Abgastemperatur vor Turbolader 4 bzw. nach Turbolader 4 ermitteln. Bei zu hoher Verdichtung könnte beispielsweise über einen Turbinenbypass 7 (ein so genanntes waste gate) die Leistung an der Verdichtungseinrichtung 2 reduziert werden. In analoger Weise kann über ein Umblaseventil oder einen so genannten Turbobypass 6 verdichtetes Gas vor den Verdichter rückgeführt werden. Insbesondere wird auch die Temperatur der verdichteten Luft (des Treibstoff-Luftgemischs) vor dem Eintritt in den Brennraum als Regelparameter herangezogen, da die Temperatur vor dem Brennraum ein Maß für die Kondensation (in Abhängigkeit vom Druck) ist. Hierfür ist die Temperaturmessvorrichtung 20 (beispielsweise ein Thermometer) vorgesehen, die mit der Regeleinrichtung 11 in Kommunikation steht.

Die Berechnung der absoluten Feuchtigkeit (Kilogramm Wasser pro Kilogramm trockene Luft) wird mit Hilfe der relativen Feuchtigkeit in Prozent der Ansaugtemperatur in Grad Celsius und dem Luftdruck in Millibar ermittelt. Abschließend sei im Folgenden ein mögliches Regelungskonzept beschrieben.

Die absolute Feuchte [kg Wasser / kg trockene Luft] wird mit der Hilfe der ermittelten relativen Feuchte [%], der Ansaugtemperatur [°C] und dem Luftdruck [mbar] ermittelt. Der Luftdruck $P_{baro}$ wird mithilfe eines Ladedrucksensors ermittelt. Der Messwert wird, nur bei Motorstillstand und solange der Motor nicht angefordert wird, laufend übernommen. Zur Berechnung der einzelnen Parameter wird auf die unten angeführte Formelsammlung verwiesen

Um den Motor auf konstante NO$_x$ Emission zu regeln, wird mit Hilfe von zwei Stützstellen ein Offset zur Regelungsgeraden ("Leanox-Gerade"; die Regelung erfolgt gemäß EP 0259 382 B1, auf deren Offenbarung verwiesen sei) von der Motorleistung hinzugefügt. Die Stützstellen befinden sich zum einem bei der Aktivierungsleistung der Klopfregelung und zum anderen bei Motorvolllast. Bei steigender Luftfeuchtigkeit wird bei gleichbleibender Leistung der Ladedruck reduziert. Bei der Abspeicherung der Punkte für die Regelungsgeraden wird der aktuelle Feuchtegehalt berücksichtigt. Von den Ladedrücken (SAVE 1 und SAVE 2) wird der Feuchtekompensationsanteil automatisch abzogen.

Um Kondensation nach dem Gemischkühler zu vermeiden, wird anhand der aktuellen Feuchte und der aktuellen Gemischtemperatur der maximal erlaubte Ladedruck berechnet. Dieser Druck begrenzt mittels einer eigenen Leistungsreduktion die Motorleistung.

Mittels eines Offsetwerts kann das Einwirken des maximal erlaubten Ladedrucks auf die Leistungsabsenkung verringert und damit verzögert werden.

Berechnung der t2'Feuchtigkeit (siehe Fig.) vor den Einlassventilen:

Außer der Ladedruckregelung kann auch eine Anhebung der Gemischtemperatur zur Vermeidung von Kondensation beitragen. Mittels Parameter kann angegeben werden, um welchen Wert die Temperatur angehoben werden darf. Die Berechnung dieser Temperatur ist unter dem Punkt Formelsammlung angeführt.

Kondensationsvermeidungsregelung:

Bei steigender absoluter Feuchte werden folgende Schritte durchgeführt:

Erhöhung der Gemischtemperatur: Steigt die Feuchte kann durch eine höhere Gemischtemperatur mehr Wasser im Gemisch aufgenommen werden. Die Kondensation ist somit geringer. Sollte die Gemischtemperaturregelung möglich sein, so kann mittels Freigabeparameter ein Offset hinzugefügt werden. Die Gemischtemperatur wird dann solange erhöht, bis die maximal erlaubte Temperatur (Parameterwert) erreicht ist. Die angegebene Temperatur ist auf den beim Gemischtemperaturregler angegeben Sollwert zu beziehen. Sollte sich die Ist-Gemischtemperatur nicht in einer einstellbaren Zeit bis auf 2°C Abweichung annähern, wird ebenfalls die Leistungsreduktion aktiviert. Damit der Unterschied zwischen den beiden Temperaturen angepasst werden kann, gibt es hierfür einen eigenen Parameter.

Leistungsreduktion:

Wenn die Gemischtemperaturanhebung nicht möglich oder deaktiviert ist, tritt die Leistungsreduktion in Kraft. Die Leistungsreduktion ist über einen Parameter ein/ausschaltbar und verringert die Leistung laut dem maximal zulässigen Ladedrucks bis zu einer minimalen Leistung (Parameterwert). Das Maß des Einflusses der Feuchte kann mittels Offset (Parameterwert) nach unten beeinflusst werden.

Bei fallender absoluter Feuchte werden folgende Schritte durchgeführt:

Leistungsanhebung (sollte die absolute Feuchte wieder geringer werden, dann wird die Leistung wieder erhöht bis die Nennleistung erreicht wurde), Gemischtemperaturabsenkung (sinkt die absolute Feuchte weiter, dann wird die Gemischtemperatur wieder abgesenkt bis der Offset zum Sollwert wieder gleich Null ist).

Formelsammlung:

Berechnung der absoluten Feuchte [kg Wasser / kg trockene Luft] aus relativer Feuchte [%], Ansaugtemperatur [°C] und Luftdruck [mbar]:

1. Messung Luftdruck $P_{baro}$ mit Hilfe des Ladedrucksensors. Der Messwert wird, nur bei Motorstillstand und solange der Motor nicht angefordert wird, laufend übernommen.
2. Berechnung Sättigungsdampfdruck $P_s$ bei der Ansaugtemperatur mit der Formel nach Antoine:

$$p_s = 10^{\left(8.0732991 - \left(\frac{1656.39}{226.86 + T}\right)\right)}$$

$P_s$    Sättigungspartialdruck des Wassers in der Luft in [mbar]
T    Ansaugtemperatur in [°C]

3. Berechnung der absoluten Feuchte mit der Formel nach Dalton:

$$x_w = 0{,}622 \cdot \frac{p_s}{\frac{p_{baro}}{\varphi} - p_s}$$

$x_w$    Wassergehalt in [kg Wasser / Kg trockener Luft]
$P_{baro}$    Luftdruck in [mbar]
$\varphi$    Luftfeuchte in [%/100]

$NO_x$ Kompensation:

$$Offset\_Leanox = \frac{Kompensationswert\_P_N \cdot 1000}{Feuchte_{absolut}}$$

$$Offset\_Leanox = \frac{Kompensationswert\_P_{Klopf\_Act} \cdot 1000}{Feuchte_{absolut}}$$

| | |
|---|---|
| Offset_Leanox | Ladedruckoffset durch Feuchtekompensation in [mbar] |
| Kompensationswert_$p_{Klopf\_Act}$ | Kompensation bei Klopfregleraktivierungsleistung [mbar] |
| Kompensationswert_$p_N$ | Kompensation bei Motornennleistung in [mbar] |
| Feuchte$_{absolut}$ | Feuchte absolut in [kg/kg] |

Berücksichtigung der Feuchte beim Speichern der LEANOX Punkte:

zB. Abspeicherung der Leanox Geraden bei Motorhalblast und einer absoluten Feuchte von X [kg/kg]

$$LEANOX\_P1\_Ladedruck = P2´ + X * 1000 * Kompensationswert_{Leistung\_P1}$$

$$LEANOX\_P2\_Ladedruck = P2´ + X * 1000 * Kompensationswert_{Leistung\_P2}$$

| | |
|---|---|
| LEANOX_P1_Ladedruck | abgespeicherter Ladedruck bei LEANOX SAVE 1 [mbar] |
| LEANOX_P2_Ladedruck | abgespeicherter Ladedruck bei LEANOX SAVE 1 [mbar] |
| P2' | Ladedruck in [mbar] |
| X | Feuchte in [kg/kg] |
| Kompensationswert$_{Leistung\_P1}$ | Kompensation bei LEANOX SAVE 1 Leistung in [mbar] |
| Kompensationswert$_{Leistung\_P2}$ | Kompensation bei LEANOX SAVE 2 Leistung in [mbar] |

Berechnung maximaler Ladedruck nach Formel 1 und 2. Bei diesem Ladedruck wird Kondensation in Kauf genommen.

Formel 1: Berechnung der Feuchte abzüglich den einstellbaren Offset.

$$Feuchte\_abs\_Offset = Feuchte_{absolut} * Prozent_{Offset}$$

| | |
|---|---|
| Feuchte_abs_Offset | Feuchte absolut mit Offset reduziert in [kg/kg] |
| Feuchte$_{absolut}$ | Feuchte absolut in [g/kg] |
| Prozent$_{Offset}$ | Prozentwert (z.B. 90% für 10% Reduzierung) in [%] |

Formel 2: Berechnung des maximal erlaubten Ladedrucks

$$Ladedruck_{maximum} = \frac{0.622 \cdot P_{s\_t2}}{Feuchte\_abs\_Offset} + P_{s\_t2}$$

| | |
|---|---|
| Ladedruck$_{maximum}$ | Maximal erlaubter Ladedruck in [N/m$^2$] |
| P$_{s\_t2}$ | P sättigung bei Gemischtemperatur in [N/m$^2$] |
| Feuchte_abs_Offset | Feuchte absolut mit Offset reduziert in [kg/kg] |

Der erlaubte Ladedruck wird durch die Skalierung des Ladedrucksensors (z.B. 0 - 6.5 bar) begrenzt. Der maximal erlaubte Ladedruck wird über 10 Sekunden gemittelt. Die einzelnen maximalen Ladedrücke werden hierfür alle 100ms in einem Speicher abgelegt.
Dieselbe Mittelung wird auch für den aktuellen Ladedruck verwendet.

Berechnung t2' Feuchtigkeit:

Formel 1: Berechnung Sättigungspartial Druck bei aktuellen Ladedruck und Feuchte Offset:

$$P_{S\_LFO} = \frac{P2' \cdot Feuchte\_abs\_Offset}{0.622 + Feuchte\_abs\_Offset}$$

$P_{S\_LFO}$                 sättigungspartial Druck - Ladedruck Feuchte Offset [mbar]
$P2'$                Ladedruck in [mbar]
Feuchte_abs_Offset     Feuchte absolut mit Offset reduziert in [kg/kg]

Formel 2: Berechnung der minimalen Gemischtemperatur abhängig vom $P_{S\_LFO}$:

$$t2'_{Feuchte} = \frac{-1656.39}{\log(P_{S\_LFO}) - 8.0732991} - 226.86$$

$t2'_{Feuchte}$      minimale Gemischtemperatur humidity [°C]

$P_{S\_LFO}$      sättigungspartial Druck - Ladedruck Feuchte Offset in [mbar]

**Patentansprüche**

1. Verfahren zum Betreiben einer Brennkraftmaschine (1), wobei Luft angesaugt und anschließend verdichtet wird, bevor sie zumindest einem Brennraum der Brennkraftmaschine (1) zugeführt wird, wobei die Luftfeuchtigkeit der angesaugten Luft ermittelt wird und die Temperatur der dem Brennraum zugeführten verdichteten Luft in Abhängigkeit von der Luftfeuchtigkeit der angesaugten Luft verändert wird, **dadurch gekennzeichnet, dass** bei größerer Luftfeuchtigkeit in der angesaugten Luft die Temperatur der dem Brennraum zuzuführenden verdichtenden Luft erhöht wird, wobei oberhalb eines, vorzugsweise vorgebbaren, maximalen Feuchtigkeitswertes die Temperatur der verdichteten Luft nicht mehr erhöht wird und die Ausgangsleistung der Brennkraftmaschine (1) reduziert wird.

2. Verfahren nach Anspruch 1, **dadurch gekennzeichnet, dass** die Temperatur der dem Brennraum zugeführten verdichteten Luft so verändert wird, dass die Brennkraftmaschine auf einem im Wesentlichen konstanten Betriebsparameter geregelt wird.

3. Verfahren nach Anspruch 2, **dadurch gekennzeichnet, dass** der Betriebsparameter ein Emissionswert ist.

4. Verfahren nach Anspruch 3, **dadurch gekennzeichnet, dass** auf eine konstante NOx-Konzentration geregelt wird.

5. Verfahren nach einem der vorangegangenen Ansprüche, **dadurch gekennzeichnet, dass** die Ausgangsleistung der Brennkraftmaschine (1) durch Anpassung des Ladedrucks erfolgt.

6. Verfahren nach einem der Ansprüche 1 bis 5, **dadurch gekennzeichnet, dass** die dem Brennraum zuzuführende Luft gemeinsam mit dem Treibstoff, vorzugsweise Treibgas, verdichtet wird.

7. Verfahren nach einem der Ansprüche 1 bis 6, **dadurch gekennzeichnet, dass** die Regelung auf konstante NOx-Emission durch Bestimmung des Ladedrucks erfolgt.

8. Verfahren nach einem der vorangegangenen Ansprüche, **dadurch gekennzeichnet, dass** der maximale Feuchtigkeitswert in Abhängigkeit vom Sättigungspartialdruck des Wassers festgelegt wird.

9. Brennkraftmaschine (1) umfassend eine Gasmischeinrichtung (17) zum Mischen von Treibstoff und Luft, ein nachgeschaltete Verdichtungseinrichtung (2) zum Verdichten von Gas, eine Vorrichtung (3) zum Verändern der Temperatur der verdichteten Luft, eine Regeleinrichtung (11) oder Steuereinrichtung, welche die Brennkraftmaschine (1) auf einen im Wesentlichen konstanten Betriebsparameter regelt, wobei ein Feuchtigkeitssensor (8) vorgesehen ist, mit dem die Luftfeuchtigkeit der von der Brennkraftmaschine (1) im Betriebszustand angesaugten Luft vor der Verdichtungseinrichtung (2) messbar ist, **dadurch gekennzeichnet**, das die Steuereinrichtung oder Regeleinrichtung (11) die Vorrichtung (3) zum Verändern der Temperatur der verdichteten Luft in Abhängigkeit von der Luftfeuchtigkeit steuert oder regelt.

10. Brennkraftmaschine nach Anspruch 9, **dadurch gekennzeichnet, dass** die Vorrichtung (3) zum Verändern der Temperatur der verdichteten Luft eine Kühleinrichtung aufweist.

11. Brennkraftmaschine nach Anspruch 9 oder Anspruch 10, **dadurch gekennzeichnet, dass** die Vorrichtung (3) zum Verändern der Temperatur der verdichteten Luft eine Heizeinrichtung aufweist.

12. Brennkraftmaschine nach einem der Ansprüche 9 bis 11, **dadurch gekennzeichnet, dass** die Regeleinrichtung (11) die Brennkraftmaschine (1) auf einen im Wesentlichen konstanten NOx-Emissionswert regelt.

13. Brennkraftmaschine nach einem der Ansprüche 9 bis 12, **dadurch gekennzeichnet, dass** die Regeleinrichtung (11) die Brennkraftmaschine (1) auf eine im Wesentlichen konstante Ausgangsleistung regelt.

14. Brennkraftmaschine nach einem der Ansprüche 9 bis 13, **dadurch gekennzeichnet, dass** die Regeleinrichtung (11) derart ausgebildet ist, dass sie bei höherer Luftfeuchtigkeit mittels der Vorrichtung zum Verändern der Temperatur der verdichteten Luft die Temperatur der verdichteten Luft erhöht und bei Überschreiten eines oberen Grenzwertes der Feuchtigkeit der angesaugten Luft die Temperatur auf im Wesentlichen konstanten Wert hält und die Ausgangsleistung der Brennkraftmaschine vermindert.

15. Brennkraftmaschine nach Anspruch 14, **dadurch gekennzeichnet, dass** die Ausgangsleistung der Brennkraftmaschine (1) durch Anpassen des Ladedrucks, vorzugsweise durch Betätigung einer Drosselklappe (5) und/oder eines Umblaseventils (6), angepasst wird.

16. Stationäre Kraftanlage umfassend einen Generator (10) und eine Brennkraftmaschine (1) nach einem der Ansprüche 9 bis 15.

**Claims**

1. A method of operating an internal combustion engine (1), wherein air is inducted and then compressed before it is fed to at least one combustion chamber of the internal combustion engine (1), wherein the air humidity of the inducted air is determined and the temperature of the compressed air fed to the combustion chamber is altered in dependence on the air humidity of the inducted air, **characterized in that** with higher air humidity in the inducted air the temperature of the compressed air to be fed to the combustion chamber is increased, wherein the temperature of the compressed air is not increased further above a preferably predeterminable, maximum humidity value and the output power of the internal combustion engine (1) is reduced.

2. A method as set forth in claim 1 **characterized in that** the temperature of the compressed air fed to the combustion chamber is so altered that the internal combustion engine is regulated to a substantially constant operating parameter.

3. A method as set forth in claim 2 **characterized in that** the operating parameter is an emission value.

4. A method as set forth in claim 3 **characterized in that** regulation is effected to a constant NOx concentration.

5. A method as set forth in one of the previous claims **characterized in that** the output power of the internal combustion engine (1) is effected by adaptation of the boost pressure.

6. A method as set forth in one of claims 1 through 5 **characterized in that** the air fed to the combustion chamber is compressed jointly with the fuel, preferably fuel gas.

7. A method as set forth in one of claims 1 through 6 **characterized in that** regulation is effected to a constant NOx emission by determining the boost pressure.

8. A method as set forth in one of the previous claims **characterized in that** the maximum humidity value is established in dependence on the saturation partial pressure of the water.

9. An internal combustion engine (1) including a gas mixing device (17) for mixing fuel and air, a downstream-connected compressor device (2) for compressing gas, a device (3) for altering the temperature of the compressed air, and a regulating device (11) or control device which regulates the internal combustion engine (1) to a substantially constant operating parameter, wherein there is provided a humidity sensor (8) with which the air humidity of the air inducted by the internal combustion engine (1) in the operating condition can be measured upstream of the compressor device (2), **characterized in that** the control device or regulating device (11) controls or regulates the device (3) for altering the temperature of the compressed air in dependence on the air humidity.

10. An internal combustion engine as set forth in claim 9 **characterized in that** the device (3) for altering the temperature of the compressed air has a cooling device.

11. An internal combustion engine as set forth in claim 9 or claim 10 **characterized in that** the device (3) for altering the temperature of the compressed air has a heating device.

12. An internal combustion engine as set forth in one of claims 9 through 11 **characterized in that** the regulating device (11) regulates the internal combustion engine (1) to a substantially constant NOx emission value.

13. An internal combustion engine as set forth in one of claims 9 through 12 **characterized in that** the regulating device (11) regulates the internal combustion engine (1) to a substantially constant output power.

14. An internal combustion engine as set forth in one of claims 9 through 13 **characterized in that** the regulating device (11) is so adapted that at a higher air humidity level it increases the temperature of the compressed air by means of the device for altering the temperature of the compressed air and when an upper limit value in respect of the humidity of the inducted air is exceeded it holds the temperature at a substantially constant value and reduces the output power of the internal combustion engine.

15. An internal combustion engine as set forth in claim 14 **characterized in that** the output power of the internal combustion engine (1) is adapted by adaptation of the boost pressure, preferably by actuation of a throttle flap (5) and/or a blow-by valve (6).

16. A stationary power generating installation including a generator (10) and an internal combustion engine (1) as set forth in one of claims 9 through 15.

## Revendications

1. Procédé permettant de faire fonctionner un moteur à combustion interne (1), dans lequel de l'air est aspiré puis comprimé avant d'être amené à au moins une chambre de combustion du moteur à combustion interne (1), dans lequel l'humidité de l'air aspiré est déterminée et la température de l'air comprimé amené à la chambre de combustion est modifiée en fonction de l'humidité de l'air aspiré, **caractérisé en ce que**, lorsque l'humidité de l'air dans l'air aspiré est plus élevée, la température de l'air en train d'être comprimé et en train d'être amené à la chambre de combustion est augmentée, dans lequel la température de l'air comprimé, au-dessus d'une valeur d'humidité maximale, pouvant de préférence être prédéfinie, n'est plus augmentée et la puissance de sortie du moteur à combustion interne (1) est réduite.

2. Procédé selon la revendication 1, **caractérisé en ce que** la température de l'air comprimé amené à la chambre de combustion est modifiée de sorte que le moteur à combustion interne est réglé sur un paramètre de fonctionnement sensiblement constant.

3. Procédé selon la revendication 2, **caractérisé en ce que** le paramètre de fonctionnement est une valeur d'émission.

**4.** Procédé selon la revendication 3, **caractérisé en ce qu'**un réglage sur une concentration de NOx constante est effectué.

**5.** Procédé selon l'une quelconque des revendications précédentes, **caractérisé en ce que** la puissance de sortie du moteur à combustion interne (1) est effectuée par une adaptation de la pression d'admission.

**6.** Procédé selon l'une quelconque des revendications 1 à 5, **caractérisé en ce que** l'air en train d'être amené à la chambre de combustion est comprimé conjointement avec le combustible, de préférence le gaz propulseur.

**7.** Procédé selon l'une quelconque des revendications 1 à 6, **caractérisé en ce que** le réglage sur une émission de NOx constante est effectué par détermination de la pression d'admission.

**8.** Procédé selon l'une quelconque des revendications précédentes, **caractérisé en ce que** la valeur d'humidité maximale est déterminée en fonction de la pression partielle de saturation de l'eau.

**9.** Moteur à combustion interne (1) comprenant un système de mélange de gaz (17) destiné à mélanger le combustible et l'air, un système de compression (2) monté en aval destiné à comprimer le gaz, un dispositif (3) destiné à modifier la température de l'air comprimé, un système de réglage (11) ou un système de commande, lequel règle le moteur à combustion interne (1) sur un paramètre de fonctionnement sensiblement constant,
dans lequel un capteur d'humidité (8) est prévu, au moyen duquel l'humidité de l'air aspiré par le moteur à combustion interne (1) dans l'état de fonctionnement peut être mesurée devant le système de compression (2),
**caractérisé en ce que** le système de commande ou le système de réglage (11) commande ou règle le dispositif (3) destiné à modifier la température de l'air comprimé en fonction de l'humidité de l'air.

**10.** Moteur à combustion interne selon la revendication 9, **caractérisé en ce que** le dispositif (3) destiné à modifier la température de l'air comprimé présente un système de refroidissement.

**11.** Moteur à combustion interne selon la revendication 9 ou la revendication 10, **caractérisé en ce que** le dispositif (3) destiné à modifier la température de l'air comprimé comprend un système de chauffage.

**12.** Moteur à combustion interne selon l'une quelconque des revendications 9 à 11, **caractérisé en ce que** le système de réglage (11) règle le moteur à combustion interne (1) sur une valeur d'émission de NOx sensiblement constante.

**13.** Moteur à combustion interne selon l'une quelconque des revendications 9 à 12, **caractérisé en ce que** le système de réglage (11) règle le moteur à combustion interne (1) sur une puissance de sortie sensiblement constante.

**14.** Moteur à combustion interne selon l'une quelconque des revendications 9 à 13, **caractérisé en ce que** le système de réglage (11) est conçu de telle manière que, lorsque l'humidité de l'air est plus élevée, il augmente la température de l'air comprimé au moyen du dispositif destiné à modifier la température de l'air comprimé et, lorsqu'une valeur limite supérieure de l'humidité de l'air aspiré est dépassée, il maintient la température à une valeur sensiblement constante et diminue la puissance de sortie du moteur à combustion interne.

**15.** Moteur à combustion interne selon la revendication 14, **caractérisé en ce que** la puissance de sortie du moteur à combustion interne (1) est adaptée par adaptation de la pression d'admission, de préférence par actionnement d'un clapet d'étranglement (5) et/ou d'une soupape de recirculation (6).

**16.** Centrale électrique fixe comprenant un générateur (10) et un moteur à combustion interne (1) selon l'une quelconque des revendications 9 à 15.

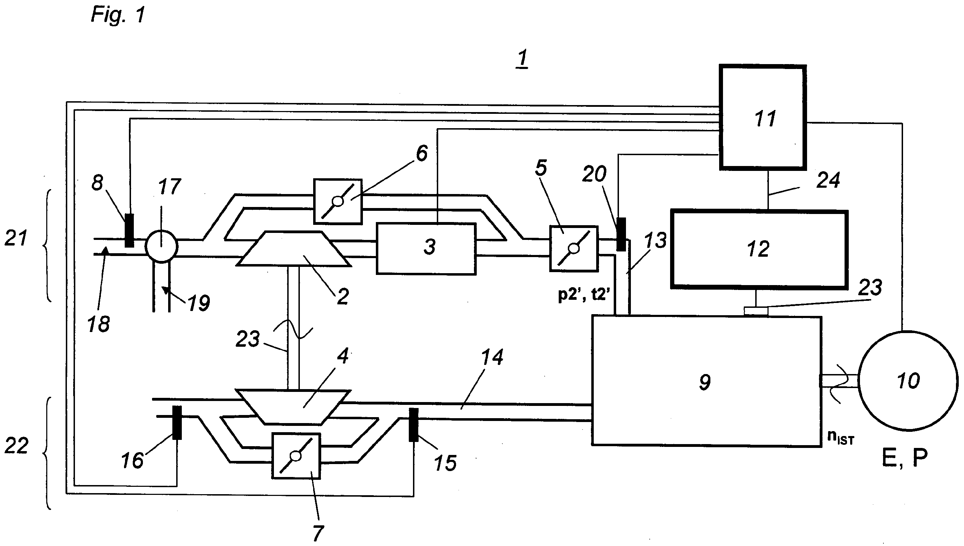

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1403493 A2

- EP 0259382 B1